**Europäisches Patentamt**

**European Patent Office**

**Office européen des brevets**

(11) Veröffentlichungsnummer: **0 127 567**

**A1**

(12) **EUROPÄISCHE PATENTANMELDUNG**

(21) Anmeldenummer: **84730037.3**

(22) Anmeldetag: **13.04.84**

(51) Int. Cl.³: **A 01 K 83/00**

(30) Priorität: **28.04.83 DE 3315723**

(43) Veröffentlichungstag der Anmeldung:
**05.12.84 Patentblatt 84/49**

(84) Benannte Vertragsstaaten:
**AT BE CH DE FR GB IT LI NL SE**

(71) Anmelder: **Seidenpfennig, Monika**
**Tellingstedter Strasse 16**
**D-2245 Süderdorf(DE)**

(72) Erfinder: **Seidenpfennig, Monika**
**Tellingstedter Strasse 16**
**D-2245 Süderdorf(DE)**

(74) Vertreter: **Lüke, Dierck-Wilm, Dipl.-Ing.**
**Gelfertstrasse 56**
**D-1000 Berlin 33(DE)**

(54) **Angelhaken.**

㉗ Ein Angelhaken mit zwei Fanghaken und einem befestigungshaken für einen Köderfisch soll dahingehend verbessert werden, daß der zu fangende Fisch, insbesondere Raubfisch beim Anschlag des Anglers sicher an einem der beiden Fanghaken gefangen wird, ganz gleich ob der Raubfisch den Köderfisch von vorne oder hinten anbeißt bzw. mit dem Kopf oder Schwanz zuerst verschluckt. Hierzu sind die beiden Fanghaken (3, 4) im wesentlichen in einer Projektionsebene (9) beidseits des gemeinsamen Schaftes (10) angeordnet und der Befestigungshaken (7) ist im wesentlichen rechtwinklig zur Projektionsebene (9) zwischen den beiden Fanghaken (3, 4) abgewinkelt. Ferner weisen alle drei Hakenspitzen (3, 4 und 7) etwa parallel zum gemeinsamen Schaft (10) zu der Hakenöse (1).

FIG.4

EP 0 127 567 A1

Monika Seidenpfennig, Tellingstedter Str. 16, 2245 Süderdorf

Angelhaken

Die Erfindung bezieht sich auf einen Angelhaken mit zwei Fanghaken und einem Befestigungshaken für einen Köderfisch.

Derartige Angelhaken sind als Drilling bekannt, wobei die drei Haken symmetrisch zueinander um 120° um die Achse des Hakens verteilt angeordnet sind. Einer der drei Haken wird als Befestigungshaken für einen Köderfisch verwendet. Die beiden übrigen Haken bilden die Fanghaken. Diese stehen beim Einstechen des Befestigungshakens unter die Rückenflosse eines Köderfisches seitlich von diesem ab, wobei beide, auf ein und derselben Seite des Köderfisches angeordnete Fanghaken quer vom Köderfisch abstehen. Hierbei besteht beim Anbiß des zu fangenden Fisches die Gefahr , daß dieser auf die Fanghaken beißt, bevor er den Köderfisch richtig gepackt hat, sodaß der zu fangende Fisch nicht fest auf die Fanghaken beißt , sondern von seiner Beute, dem Köderfisch wieder abläßt und von den Fanghaken wieder loskommt.

Es ist ferner bekannt, den Befestigungshaken in einer quer und senkrecht zur Projektionsebene der beiden Fanghaken gerichteten Ebene anzuordnen, sodaß der Befestigungshaken quer unter die Rückenflosse des Köderfisches geführt werden kann, wobei die Fanghaken jeweils beidseits des Rückens des Köderfisches liegen. Bei diesem Angelhaken muss der gefangene Fisch den Köderfisch jedoch von der Seite der Fanghaken,d.h.vom Kopf her anbeißen , damit diese in den Oberkiefer des zu fangenden Fisches eindringen können. Beißt der zu fangende Fisch jedoch von der Seite des Schwanzes des Köderfisches an, so können die Fanghaken nicht in den Kiefer des zu fangenden Fisches eingreifen, sondern bleiben wirkungslos.

Der Erfindung liegt die Aufgabe zugrunde, einen Angelhaken der gattungsgemässen Art dahingehend auszubilden, daß der zu fangende Fisch den Köderfisch sowohl von vorne als auch von hinten her anbeißen kann, wobei in jedem der beiden Fälle mindestens ein Fanghaken in den Oberkiefer des zu fangenden Fisches eindringt, ohne daß der Köderfisch den Fanghaken vor dem Zubiß bemerken kann , bzw. in gleicher Weise mit dem Kopf oder mit dem Schwanz zuerst schlucken kann , wobei ein Fanghaken beim Anschlag des Anglers mit Sicherheit sitzt .

Zur Lösung dieser Aufgabe sieht die Erfindung vor , daß die
beiden Fanghaken im wesentlichen in einer Ebene beidseits des
gemeinsamen Schaftes angeordnet sind und daß der Befestigungshaken im wesentlichen rechtwinklig zur Ebene der beiden Fanghaken abgewinkelt ist, wobei die Spitzen aller Haken etwa
parallel zum gemeinsamen Schaft auf der Seite der Hakenöse
angeordnet sind. Wenn der Befestigungshaken in den Bereich der
Rückenflosse eines Köderfisches eingestochen ist, liegen die
beiden Fanghaken mit ihren Schäften jeweils auf einer Körperseite des Köderfisches glatt an, wobei der eine Fanghaken
in Richtung zum Kopf und der andere Fanghaken in Richtung
zum Schwanz des Köderfisches gerichtet ist. Beide Fanghaken
liegen glatt an der einen Körperseite des Köderfisches an,
sie stehen nicht quer von diesem ab. Da die Fanghaken am
Köderfisch anliegen, kommt der zu fangende Fisch mit dem
Fanghaken beim Anbiß nicht sofort in Berührung, sondern erst
beim kräftigen Biß auf den Köderfisch, woraufhin mindestens
einer der beiden Fanghaken in den Oberkiefer des zu fangenden
Fisches eindringt. Diese Wirkung tritt unabhängig davon ein,
ob der zu fangende Fisch den Köderfisch von Seiten des Kopfes
oder von Seiten des Schwanzes her anbeißt bzw. schluckt .

Weitere vorteilhafte Ausgestaltungen der Erfindung ergeben sich aus den Unteransprüchen. Durch die Merkmale des Unteranspruches 2 wird erreicht, daß die Fanghaken noch dichter am Körper des Köderfisches anliegen und somit vom Raubfisch erst bei kräftigem Zubiß bemerkt werden. Durch die Merkmale des Unteranspruches 3 liegen die Fanghaken am Körper des Köderfisches an, selbst wenn der Befestigungshaken nur durch die Rückenflosse des Köderfisches durchführt ist.

Die Erfindung ist nachfolgend anhand eines in den Zeichnungen dargestellten Ausführungsbeispieles näher erläutert. Es zeigen:

Fig. 1 eine perspektivische Darstellung des Angelhakens innerhalb der Kontur eines Köderfisches,

Fig. 2 eine Ansicht des Angelhakens von vorn,

Fig. 3 eine Ansicht des Angelhakens von der Seite und

Fig. 4 eine Draufsicht auf den Angelhaken.

Der Angelhaken umfaßt ausgehend von einer Hakenöse 1, an welcher eine Angelschnur 2 bzw. das Vorfach derselben angreift, zwei Fanghaken 3,4, die mit der Hakenöse 1 über die Schäfte 5,6 verbunden sind, welche zur Hakenöse 1 hin einen

gemeinsamen Schaft 10 bilden und ferner einen Befestigungshaken 7, der mit der Hakenöse 1 über seinen zugeordneten Schaft 8 verbunden ist, der zur Hakenöse 1 hin mit den Schäften 5,6 den gemeinsamen Schaft 10 bildet .

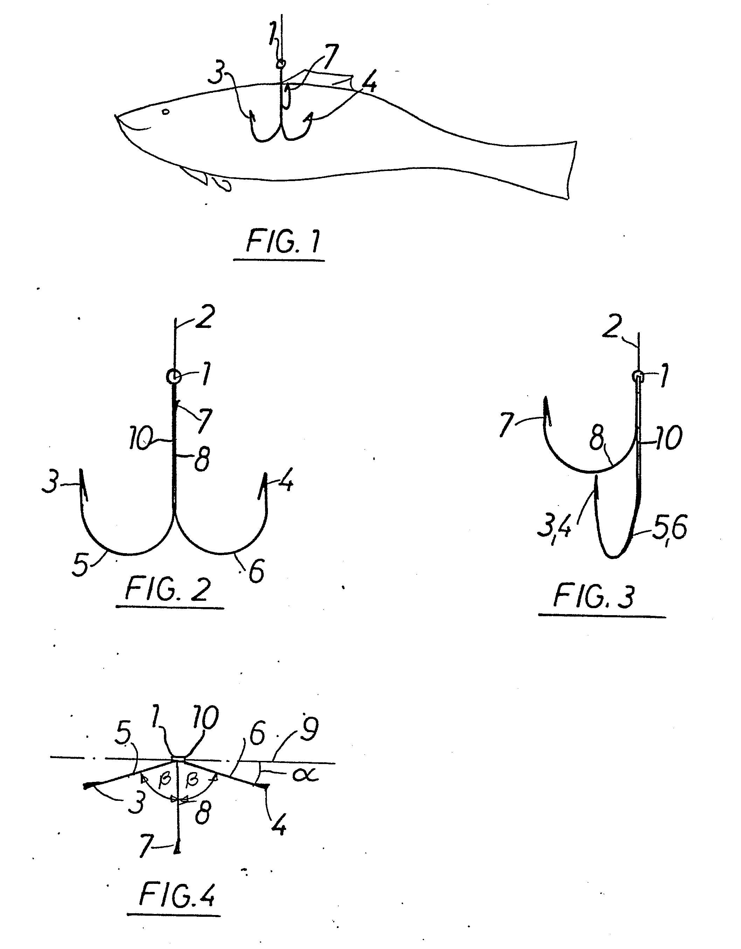

Die beiden Fanghaken 3,4 sind im wesentlichen in einer Projektionsebene 9 beidseits des beiden Schäften 5,6 gemeinsamen Schaftes 10 angeordnet, wohingegen der Befestigungshaken 7 im wesentlichen rechtwinklig zur Projektionsebene 9 der beiden Fanghaken 3,4 abgewinkelt ist und die Spitzen aller Haken 3,4, 7 etwa parallel zum allen Schäften 5,6,8 gemeinsamen Schaft 1o zur Seite der Hakenöse 1 angeordnet sind. In der Ansicht gemäss Fig. 2 bildet der Angelhaken den kleinen griechischen Buchstaben "$\omega$ " aus.

Die beiden Fanghaken 3,4 sind um kleine Winkel $\alpha$ aus der Projektionsebene 9 in Richtung auf den Befestigungshaken 7 vom gemeinsamen Teil der Schäfte 5,6 abgewinkelt, wie es Fig. 4 zeigt . Der Befestigungshaken 7 ist zwischen den beiden Fanghaken 3,4 angeordnet und schließt mit diesen je den Winkel $\beta$ von etwas weniger als 90° ein , genau 90° $-\alpha$.

Schließlich ist der Schaft 8 des Befestigungshakens 7 kürzer als die beiden Schäfte 5,6 der beiden Fanghaken 3,4, wie es Fig. 3 zeigt.

Der an einem Köderfisch (Fig.1) befestigte Angelhaken liegt mit seinen beiden Fanghaken 3,4 dicht an einer Körperseite des Köderfisches an, wenn der Befestigungshaken 7 unter der Rückenflosse des Köderfisches durchgesteckt ist.

Besonders bedeutsam ist der erfindungsgemäße Angelhaken beim Fang von Raubfischen . Wenn der zu fangende Raubfisch den Köderfisch mitsamt dem Angelhaken geschnappt hat , kann er sich nicht stechen , solange er nicht zubeißt . Jetzt beginnt der Freßvorgang des Raubfisches jedoch erst richtig. Der Raubfisch verschluckt den Köderfisch mitsamt dem Angelhaken , dessen erfindungsgemäße Ausgestaltung nun erst richtig zur Geltung kommt . Ganz gleich , wie der Köderfisch geschluckt worden ist - von vorne oder von hinten - jetzt sitzt beim Anschlag des Anglers mit der Angelrute einer der beiden Fanghaken 3,4 mit Sicherheit immer . Dies ist bei einigen Raubfischarten äußerst wichtig, da man nicht weiß , ob dieser Raubfisch den Köderfisch zuerst mit dem Kopf oder zuerst mit dem Schwanz schluckt .

Patentansprüche

-------------------------------------

1. Angelhaken mit zwei Fanghaken und einem Befestigungshaken für einen Köderfisch,

d a d u r c h   g e k e n n z e i c h n e t,

daß die beiden Fanghaken (3,4) im wesentlichen in einer
Projektionsebene (9) beidseits des gemeinsamen Schaftes (10)
angeordnet sind und daß der Befestigungshaken (7) im wesentlichen rechtwinklig zur Projektionsebene (9) der beiden Fanghaken (3,4) abgewinkelt ist, wobei die Spitzen aller Haken
(3,4,7) etwa parallel zum gemeinsamen Schaft (10) zu der
Seite der Hakenöse (1) angeordnet sind.


2. Angelhaken nach Anspruch 1, dadurch gekennzeichnet, daß
die beiden Fanghaken (3,4) um kleine Winkel $(\alpha)$ aus der

Projektionsebene (9) in Richtung auf den Befestigungshaken (7) vom Schaft ( 10 ) abgewinkelt sind.

3. Angelhaken nach Anspruch 1 oder 2, dadurch gekennzeichnet, daß der Schaft (8) des Befestigungshakens (7) kürzer als der gemeinsame Schaft ( 10 ) der beiden Fanghaken (3,4) ist.

1/1                    0127567

FIG. 1

FIG. 2

FIG. 3

FIG.4

# 0127567

EUROPÄISCHER RECHERCHENBERICHT

Europäisches
Patentamt

Nummer der Anmeldung

EP 84 73 0037

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | CA-A-1 011 553 (D.L.W. SLATER) * Anspruch 1; Seite 2, Zeile 15 - Seite 3, Zeile 5; Seite 6, Zeile 17 - Seite 7, Zeile 7; Figuren 5-7 * | 1 | A 01 K 83/00 |
| A | | 2,3 | |
| | --- | | |
| Y | US-A-1 974 358 (J.R. GLAU) * Vollständiges Dokument * | 1 | |
| | --- | | |
| A | US-A-3 121 291 (H.J. IFFLAND et al.) | | |
| | --- | | |
| A | US-A-2 334 613 (M.S. DUNKELBERGER et al.) | | |
| | ----- | | |

RECHERCHIERTE
SACHGEBIETE (Int. Cl. 3)

A 01 K 83/00

Der vorliegende Recherchenbericht wurde für alle Patentansprüche erstellt.

| Recherchenort | Abschlußdatum der Recherche | Prüfer |
|---|---|---|
| BERLIN | 18-07-1984 | BERGZOLL M C |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82